(19) Europäisches Patentamt
European Patent Office
Office européen des brevets

(11) **EP 4 307 641 A1**

(12) **EUROPEAN PATENT APPLICATION**

(43) Date of publication:
**17.01.2024 Bulletin 2024/03**

(21) Application number: **23178247.5**

(22) Date of filing: **08.06.2023**

(51) International Patent Classification (IPC):
***H04L 47/22*** *(2022.01)* ***H04L 47/28*** *(2022.01)*
***H04L 47/41*** *(2022.01)*

(52) Cooperative Patent Classification (CPC):
**H04L 47/28; H04L 47/22; H04L 47/41**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.07.2022 US 202217862723**

(71) Applicant: **Nokia Solutions and Networks Oy**
**02610 Espoo (FI)**

(72) Inventors:
- **Francini, Andrea**
  **Pittsboro, 27312 (US)**
- **Miller, Raymond**
  **Lakeville, 04487 (US)**

(74) Representative: **Swindell & Pearson Limited**
**48 Friar Gate**
**Derby DE1 1GY (GB)**

# (54) GUARANTEED-LATENCY NETWORKING

(57) Various example embodiments for supporting guaranteed-latency networking are presented herein. Various example embodiments for supporting guaranteed-latency networking may be configured to support guaranteed-latency networking based on use of a time division multiplexing (TDM) frame, such as a periodic service sequence (PSS), to support transmission of packets of a set of flows. Various example embodiments for supporting guaranteed-latency networking based on use of a PSS may be configured to support guaranteed-latency networking based on use of various PSS computation enhancements. Various example embodiments for supporting guaranteed-latency networking based on use of a PSS may be configured to support guaranteed-latency networking based on use of flow bundling.

FIG. 1
COMMUNICATION SYSTEM
100
SDN CONTROLLER
120
CGL + SGL ROUTING CONFIGURATION
CGL FLOW ALLOCATION REQUESTS
FLOW QUEUES
CGL SHAPER CONFIGURATION
SP
LOAD + DELAY MEASUREMENTS
CLASS QUEUES
CGL
SGL
BE
SP
COMMUNICATION NETWORK
110
INGRESS NODES
111
INTERIOR NODES
115
EGRESS NODES
119



Processed by Luminess, 75001 PARIS (FR)

## Description

### TECHNICAL FIELD

Various example embodiments relate generally to communication systems and, more particularly but not exclusively, to supporting guaranteed-latency networking in communication systems.

### BACKGROUND

In communication networks, various communications technologies may be used to support various types of communications.

### SUMMARY

In at least some example embodiments, an apparatus includes at least one processor and at least one memory including computer program code, wherein the at least one memory and the computer program code are configured to, with the at least one processor, cause the apparatus at least to aggregate a set of flows into a flow bundle based on respective maximum packet sizes of the respective flows and serve the flow bundle using a set of fixed-size transmission timeslots. In at least some example embodiments, the set of flows is aggregated into the flow bundle such that a sum of the maximum packet sizes of the respective flows does not exceed a timeslot size of the fixed-size transmission timeslots. In at least some example embodiments, the flow bundle includes one or more flows. In at least some example embodiments, the flows of the flow bundle share a common egress node and a common path to the common egress node. In at least some example embodiments, the flows of the flow bundle share a common latency requirement. In at least some example embodiments, the flows of the flow bundle do not share a common latency requirement. In at least some example embodiments, the flows of the flow bundle share a common maximum packet size. In at least some example embodiments, the set of fixed-size transmission timeslots is part of a periodic service sequence in which the fixed-size transmission timeslots are assigned to bundles of flows according to respective shaping rate allocations of the bundles of flows. In at least some example embodiments, a service rate of the flow bundle is set to a service rate that supports a respective latency requirement of one of the flows of the flow bundle. In at least some example embodiments, based on a determination that a sum of respective throughput requirements of the respective flows of the flow bundle exceeds the service rate of the flow bundle, the service rate of the flow bundle is modified to be set to the sum of respective throughput requirements of the respective flows. In at least some example embodiments, to serve the flow bundle using the set of fixed-size transmission timeslots, the at least one memory and the computer program code are configured to, with the at least one processor, cause the apparatus at least to serve at least one of the flows of the flow bundle using at least one of the fixed-size transmission timeslots. In at least some example embodiments, the flows of the flow bundle are served in a round-robin order. In at least some example embodiments, the flows of the flow bundle are served based on a set of credit counters associated with the respective flows of the flow bundle. In at least some example embodiments, only ones of the flows of the flow bundle with non-negative credits are served. In at least some example embodiments, the flows are continuous guaranteed-latency (CGL) flows in a software-defined guaranteed-latency networking (SD-GLN) context, wherein a relationship exists between a service rate of a CGL flow and a latency requirement that the SD-GLN context supports for that CGL flow. In at least some example embodiments, for at least one of the CGL flows, the respective CGL flow is a latency-driven flow having a respective latency requirement that imposes allocation of a respective service rate greater than a respective throughput requirement of the latency-driven flow. In at least some example embodiments, a service rate of the flow bundle is set to a service rate needed to support a respective latency requirement of one of the CGL flows of the flow bundle. In at least some example embodiments, the CGL flows aggregated into the flow bundle do not share a common latency requirement, wherein a latency requirement selected for calculation of a service rate of the flow bundle is a lowest latency requirement of any of the CGL flows in the set of CGL flows. In at least some example embodiments, based on a determination that a sum of respective throughput requirements of the respective CGL flows of the flow bundle exceeds the service rate of the flow bundle, the service rate of the flow bundle is modified to be set to the sum of respective throughput requirements of the respective CGL flows.

In at least some example embodiments, a computer readable medium stores computer program code configured to cause an apparatus to aggregate a set of flows into a flow bundle based on respective maximum packet sizes of the respective flows and serve the flow bundle using a set of fixed-size transmission timeslots. In at least some example embodiments, the set of flows is aggregated into the flow bundle such that a sum of the maximum packet sizes of the respective flows does not exceed a timeslot size of the fixed-size transmission timeslots. In at least some example embodiments, the flow bundle includes one or more flows. In at least some example embodiments, the flows of the flow bundle share a common egress node and a common path to the common egress node. In at least some example embodiments, the flows of the flow bundle share a common latency requirement. In at least some example embodiments, the flows of the flow bundle do not share a common latency requirement. In at least some example embodiments, the flows of the flow bundle share a common maximum packet size. In at least some example embodiments, the set of fixed-size transmission timeslots is part of a periodic service sequence in which the fixed-size transmission timeslots are assigned to bundles of flows according to respective shaping rate allocations of the bundles of flows. In at least some example embodiments, a service rate of the flow bundle is set to a service rate that supports a respective latency requirement of one of the flows of the flow bundle. In at least some example embodiments, based on a determination that a sum of respective throughput requirements of the respective flows of the flow bundle exceeds the service rate of the flow bundle, the service rate of the flow bundle is modified to be set to the sum of respective throughput requirements of the respective flows. In at least some example embodiments, to serve the flow bundle using the set of fixed-size transmission timeslots, the computer program code is configured to cause the apparatus at least to serve at least one of the flows of the flow bundle using at least one of the fixed-size transmission timeslots. In at least some example embodiments, the flows of the flow bundle are served in a round-robin order. In at least some example embodiments, the flows of the flow bundle are served based on a set of credit counters associated with the respective flows of the flow bundle. In at least some example embodiments, only ones of the flows of the flow bundle with non-negative credits are served. In at least some example embodiments, the flows are continuous guaranteed-latency (CGL) flows in a software-defined guaranteed-latency networking (SD-GLN) context, wherein a relationship exists between a service rate of a CGL flow and a latency requirement that the SD-GLN context supports for that CGL flow. In at least some example embodiments, for at least one of the CGL flows, the respective CGL flow is a latency-driven flow having a respective latency requirement that imposes allocation of a respective service rate greater than a respective throughput requirement of the latency-driven flow. In at least some example embodiments, a service rate of the flow bundle is set to a service rate needed to support a respective latency requirement of one of the CGL flows of the flow bundle. In at least some example embodiments, the CGL flows aggregated into the flow bundle do not share a common latency requirement, wherein a latency requirement selected for calculation of a service rate of the flow bundle is a lowest latency requirement of any of the CGL flows in the set of CGL flows. In at least some example embodiments, based on a determination that a sum of respective throughput requirements of the respective CGL flows of the flow bundle exceeds the service rate of the flow bundle, the service rate of the flow bundle is modified to be set to the sum of respective throughput requirements of the respective CGL flows.

In at least some example embodiments, a method includes aggregating a set of flows into a flow bundle based on respective maximum packet sizes of the respective flows and serving the flow bundle using a set of fixed-size transmission timeslots. In at least some example embodiments, the set of flows is aggregated into the flow bundle such that a sum of the maximum packet sizes of the respective flows does not exceed a timeslot size of the fixed-size transmission timeslots. In at least some example embodiments, the flow bundle includes one or more flows. In at least some example embodiments, the flows of the flow bundle share a common egress node and a common path to the common egress node. In at least some example embodiments, the flows of the flow bundle share a common latency requirement. In at least some example embodiments, the flows of the flow bundle do not share a common latency requirement. In at least some example embodiments, the flows of the flow bundle share a common maximum packet size. In at least some example embodiments, the set of fixed-size transmission timeslots is part of a periodic service sequence in which the fixed-size transmission timeslots are assigned to bundles of flows according to respective shaping rate allocations of the bundles of flows. In at least some example embodiments, a service rate of the flow bundle is set to a service rate that supports a respective latency requirement of one of the flows of the flow bundle. In at least some example embodiments, based on a determination that a sum of respective throughput requirements of the respective flows of the flow bundle exceeds the service rate of the flow bundle, the service rate of the flow bundle is modified to be set to the sum of respective throughput requirements of the respective flows. In at least some example embodiments, serving the flow bundle using the set of fixed-size transmission timeslots includes serving at least one of the flows of the flow bundle using at least one of the fixed-size transmission timeslots. In at least some example embodiments, the flows of the flow bundle are served in a round-robin order. In at least some example embodiments, the flows of the flow bundle are served based on a set of credit counters associated with the respective flows of the flow bundle. In at least some example embodiments, only ones of the flows of the flow bundle with non-negative credits are served. In at least some example embodiments, the flows are continuous guaranteed-latency (CGL) flows in a software-defined guaranteed-latency networking (SD-GLN) context, wherein a relationship exists between a service rate of a CGL flow and a latency requirement that the SD-GLN context supports for that CGL flow. In at least some example embodiments, for at least one of the CGL flows, the respective CGL flow is a latency-driven flow having a respective latency requirement that imposes allocation of a respective service rate greater than a respective throughput requirement of the latency-driven flow. In at least some example embodiments, a service rate of the flow bundle is set to a service rate needed to support a respective latency requirement of one of the CGL flows of the flow bundle. In at least some example embodiments, the CGL flows aggregated into the flow bundle do not share a common latency requirement, wherein a latency requirement selected for calculation of a service rate of the flow bundle is a lowest latency requirement of any of the CGL flows in the set of CGL flows. In at least some example embodiments, based on a determination that a sum of respective throughput requirements of the respective CGL flows of the flow bundle exceeds the service rate of the flow bundle, the service rate of the flow bundle is modified to be set to the sum of respective throughput requirements of the respective CGL flows.

In at least some example embodiments, an apparatus includes means for aggregating a set of flows into a flow bundle based on respective maximum packet sizes of the respective flows and means for serving the flow bundle using a set of fixed-size transmission timeslots. In at least some example embodiments, the set of flows is aggregated into the flow bundle such that a sum of the maximum packet sizes of the respective flows does not exceed a timeslot size of the fixed-size transmission timeslots. In at least some example embodiments, the flow bundle includes one or more flows. In at least some example embodiments, the flows of the flow bundle share a common egress node and a common path to the common egress node. In at least some example embodiments, the flows of the flow bundle share a common latency requirement. In at least some example embodiments, the flows of the flow bundle do not share a common latency requirement. In at least some example embodiments, the flows of the flow bundle share a common maximum packet size. In at least some example embodiments, the set of fixed-size transmission timeslots is part of a periodic service sequence in which the fixed-size transmission timeslots are assigned to bundles of flows according to respective shaping rate allocations of the bundles of flows. In at least some example embodiments, a service rate of the flow bundle is set to a service rate that supports a respective latency requirement of one of the flows of the flow bundle. In at least some example embodiments, based on a determination that a sum of respective throughput requirements of the respective flows of the flow bundle exceeds the service rate of the flow bundle, the service rate of the flow bundle is modified to be set to the sum of respective throughput requirements of the respective flows. In at least some example embodiments, the means for serving the flow bundle using the set of fixed-size transmission timeslots includes means for serving at least one of the flows of the flow bundle using at least one of the fixed-size transmission timeslots. In at least some example embodiments, the flows of the flow bundle are served in a round-robin order. In at least some example embodiments, the flows of the flow bundle are served based on a set of credit counters associated with the respective flows of the flow bundle. In at least some example embodiments, only ones of the flows of the flow bundle with non-negative credits are served. In at least some example embodiments, the flows are continuous guaranteed-latency (CGL) flows in a software-defined guaranteed-latency networking (SD-GLN) context, wherein a relationship exists between a service rate of a CGL flow and a latency requirement that the SD-GLN context supports for that CGL flow. In at least some example embodiments, for at least one of the CGL flows, the respective CGL flow is a latency-driven flow having a respective latency requirement that imposes allocation of a respective service rate greater than a respective throughput requirement of the latency-driven flow. In at least some example embodiments, a service rate of the flow bundle is set to a service rate needed to support a respective latency requirement of one of the CGL flows of the flow bundle. In at least some example embodiments, the CGL flows aggregated into the flow bundle do not share a common latency requirement, wherein a latency requirement selected for calculation of a service rate of the flow bundle is a lowest latency requirement of any of the CGL flows in the set of CGL flows. In at least some example embodiments, based on a determination that a sum of respective throughput requirements of the respective CGL flows of the flow bundle exceeds the service rate of the flow bundle, the service rate of the flow bundle is modified to be set to the sum of respective throughput requirements of the respective CGL flows.

## BRIEF DESCRIPTION OF THE DRAWINGS

The teachings herein can be readily understood by considering the following detailed description in conjunction with the accompanying drawings, in which:

FIG. 1 depicts an example embodiment of a communication system configured to support guaranteed-latency networking using a software-defined guaranteed-latency networking (SD-GLN) framework;
FIG. 2 depicts an example embodiment of a topology-hierarchy mapping for a network topology of a leaf-spine data center for illustrating construction of a shaping hierarchy configured to support guaranteed-latency networking using an SD-GLN framework;
FIG. 3 depicts an example embodiment of a leaf-spine data center fabric for illustrating support for flows based on guaranteed-latency networking using an SD-GLN framework;
FIG. 4 depicts the service rate that weighted fair queuing (WFQ) and SD-GLN bounds require to allocate to the flows of the leaf-spine data center fabric of FIG. 3;
FIG. 5 depicts an example embodiment of a topology-hierarchy mapping for a network including a network node that separates traffic to a common destination and aggregates traffic to multiple destinations;
FIG. 6 depicts an example embodiment of primary and parallel shapers for the network topology of FIG. 5;
FIG. 7 depicts results of a first experiment illustrating bound, average, and maximum queuing latency ratios for various shaper hierarchy types;

FIG. 8 depicts results of a second experiment illustrating bound, average, and maximum queuing latency ratios for various shaper hierarchy types;

FIG. 9 depicts results of a third experiment illustrating queuing latency ratios for various ingress scheduler types;

FIG. 10 depicts results of a fourth experiment illustrating queuing latency ratios for various ingress scheduler types;

FIG. 11 depicts an example embodiment of a method for supporting communication of flows using a set of fixed-size transmission timeslots;

FIG. 12 depicts an example embodiment of a method for supporting communication of flows based on bundling of the flows and serving the flow bundles using a set of fixed-size transmission timeslots; and

FIG. 13 depicts an example embodiment of a computer suitable for use in performing various functions presented herein.

To facilitate understanding, identical reference numerals have been used herein, wherever possible, in order to designate identical or similar elements that are common or related among the various figures.

## DETAILED DESCRIPTION

Various example embodiments for supporting guaranteed-latency networking are presented herein. Various example embodiments for supporting guaranteed-latency networking may be configured to support guaranteed-latency networking based on use of a time division multiplexing (TDM) frame, such as a periodic service sequence (PSS), to support transmission of packets of a set of flows. Various example embodiments for supporting guaranteed-latency networking may be implemented within various networking contexts. For example, in a software-defined guaranteed-latency networking (SD-GLN) network domain, a per-flow shaper in front of ingress links handles the flows of a top-priority continuous guaranteed latency (CGL) traffic class. The shaping rate associated with each flow coincides with the bandwidth allocated to the flow (e.g., by a path computation element (PCE), a software-defined-networking (SDN) controller, or other centralized network controller). The per-flow shaper of the ingress link supports a PSS that assigns transmission timeslots to flows according to their shaping rate allocations. Various example embodiments for supporting guaranteed-latency networking may be implemented within various device contexts which may be supported in various networking contexts, such as within a compute host network interface card (NIC), a gateway line card, or the like. It will be appreciated that various example embodiments presented herein may be provided within various other networking contexts as well as various other associated device contexts.

Various example embodiments for supporting guaranteed-latency networking based on use of a PSS may be configured to support guaranteed-latency networking based on use of various PSS computation enhancements. In the PSS computation, the set of CGL flows is augmented with a virtual idle flow $f_0$ that is provisioned with the residual bandwidth $r_0$ of the ingress link (e.g., the residual bandwidth is the difference between the link capacity and the sum of the service rates allocated to all CGL flows that traverse the link: $r_0=C- \Sigma_{j\in\{CGL\}} r_j$). The virtual idle flow is served directly by the top node in the scheduling hierarchy, without intermediate hierarchical layers. The presence of the virtual idle flow ensures that the overall behavior of the hierarchy is non-work-conserving (no CGL packet is transmitted during PSS slots that are assigned to the virtual idle flow) despite the operation of a work-conserving instance of WF2Q (e.g., WF2Q+) at each node of the hierarchy.

Various example embodiments for supporting guaranteed-latency networking based on use of a PSS may be configured to support guaranteed-latency networking based on use of flow bundling. Flow bundling may support aggregation of flows (e.g., continuous guaranteed-latency flows) into flow bundles so that an individual timeslot of the PSS can be associated with multiple flows. The bundling of flows may be performed such that flows following a common path to a common destination are bundled such that the sum of the maximum packet sizes of the flows does not exceed the timeslot size of a PSS timeslot. It is noted that while flows of a flow bundle may share a common latency requirement, it is possible for flows with different latency requirements to be included in the same flow bundle, with the latency chosen for calculation of the service rate of the bundle being the lowest required by any flow in the set of flows. The bundling of flows under a common timeslot of the PSS enables large reductions of the bandwidth reservations needed to accommodate the latency requirements of those flows, thereby increasing the utilization of the ingress link.

It will be appreciated that these and various other example embodiments and advantages or potential advantages of supporting guaranteed-latency networking may be further understood by way of reference to the various figures, which are discussed further below.

New interactive applications for consumers and verticals, as well as the establishment of network function virtualization as the architectural paradigm of Fifth-Generation (5G) cellular networks and beyond, place an emphasis on the ability to enforce tight bounds on end-to-end packet latency. Standardization efforts have produced specifications of low-latency services in mobile, local-area, and wide-area networks, but their pervasive deployment has been hindered by the complexity, poor scalability, and underwhelming performance of the associated networking tools designed to support the specification of the low-latency services. Various example embodiments presented herein may support software-defined guaranteed-latency networking (SD-GLN), a lightweight framework for the robust enforcement of tight bounds on end-to-end latency. SD-GLN does not require new hardware nor new signaling protocols and leverages software programmability where it is already broadly available, at the ingress nodes of the network domain.

New applications that 5G networks enable in both consumer and vertical markets have brought tight bounds on end-to-end (E2E) latency to the forefront of the requirement specification for network services. To minimize speed-of-light delays, processing servers for low-latency applications are being moved from core clouds to the edge of the network, sometimes as close as possible to their respective clients. However, to ensure that E2E latency remains consistently low, queuing latency also may need to be tightly controlled in each portion of the data path between client and server, including the switching fabric of the data center where the server resides and the transport segments of the 5G network (namely, front-haul, mid-haul, and backhaul, which are collectively referred to as X-haul).

Institute of Electrical and Electronics Engineers (IEEE) Time Sensitive Networking (TSN) is a family of standards for bridged networks, designed to achieve extreme accuracy on the delivery time of packets to their destinations. Most TSN instances rely on network-wide synchronization of queue service schedules to minimize or completely avoid the accumulation of queuing latency in front of the network links. However, due to the complexity of the scheduling problem, most TSN instances do not scale well with the geographical size of the network, the number of network nodes, and the number of scheduled flows.

Releases 16 and 17 of the 3GPP standard contain provisions for the integration of 5G with TSN for realization of ultra-reliable low-latency communication (URLLC) services, such that the 5G network (e.g., typically in a private, small-scale instance deployed within a factory perimeter, although it will be appreciated that other contexts also may be supported) is perceived as a single TSN node within the overall TSN network. The 5G integration model envisions communication of field devices with programmable logic controllers (PLCs) that are virtualized and hosted in edge-cloud data centers, either on-premises or remote. The model assumes that connectivity to the compute servers is provided by a TSN backbone, but does not address the limitations that TSN faces in such a large-scale network with respect to the synthesis and operation of queue service schedules for network links.

The IETF Differentiated Services (DiffServ) framework includes an expedited forwarding (EF) per-hop behavior (PHB) that enforces bounds on the queuing delay within each node of a DiffServ domain. More recently, the IETF Deterministic Networking (DetNet) Working Group has been specifying services with bounded E2E latency and zero packet losses that are intended for large-scale IP networks. Both DiffServ and DetNet generally require all interior nodes of compliant network domains to implement forwarding behaviors that contribute to the enforcement of E2E latency guarantees. However, the bounds that DiffServ and DetNet enforce on E2E latency are not necessarily tight because the interior nodes operate on traffic aggregates that homogenize the latency guarantees of their component flows at the looser end of the requirement range. The forwarding behaviors specified by both IETF frameworks include packet scheduling techniques that require the provisioning of configuration parameters in response to flow arrivals and departures and may not always be supported in commodity chipsets for packet switches and routers.

The robotic motion control use case illustrates the challenge of guaranteeing ultra-low bounds on E2E latency for 5G URLLC services. As an example, consider a use case that operates on a 2 ms cycle time, which yields a 1 ms latency budget for each direction. As processing in the robot consumes about 250 $\mu$s and the air-interface latency is bounded at 500 $\mu$s, only 250 $\mu$s are left for edge-cloud processing and for the packet transfer latency between the radio head and the server. Assuming 100 $\mu$s for server processing and 100 $\mu$s for the propagation delay (over a 20 km distance), the queuing latency budget for the entire data path between radio head and edge-cloud server is only 50 $\mu$s. This budget can be easily exhausted if a robotic motion control packet collides with packets of equal or higher scheduling priority at the network links that it traverses in the aggregation and data center networks.

Various example embodiments provide a framework for latency enforcement in large-scale networks that not only overcomes the performance and scalability limitations of IEEE TSN and IETF DetNet, but also excludes the active participation of the interior nodes of the network, requiring no modification of their hardware and software components for resource-provisioning, packet-scheduling, and synchronization purposes. Various example embodiments for guaranteed-latency networking (SD-GLN) may support criteria for classifying and prioritizing traffic flows, traffic engineering based on conventional software-defined networking (SDN), methods for realization of deep scheduling hierarchies in traffic shapers, or the like, as well as various combinations thereof. Various example embodiments for SD-GLN may leverage the programmability of the network ingress nodes, as can be commonly found in the smart network interface cards (NICs) of the data center servers and in the line cards of the gateways that interconnect neighboring network domains. It will be appreciated that these as well as various other example embodiments for latency enforcement in large-scale networks may be further understood by first considering various approaches to the enforcement of E2E latency guarantees, e.g., weighted fair queuing schedulers and shapers and the IETF DiffServ and DetNet frameworks, each of which is discussed further below.

Weighted fair queuing (WFQ) schedulers derive, from the generalized processor sharing (GPS) model, the calculation of per-flow timestamps that serve as packet transmission deadlines. Since the timestamp calculation is based on the service rates of the respective flows, the latency guarantees of WFQ schedulers are tightly coupled to their throughput guarantees. Alternative approaches have been proposed for the separation of throughput and latency guarantees, such as deadline-based schedulers; however, such schedulers generally are harder to implement than WFQ and significantly complicate the admission control function at the time of establishment of a new flow.

WFQ schedulers pay for the benefit of a deterministic upper bound on E2E latency with the overwhelming challenge of provisioning a packet queue and a service rate for every new flow that is established, at every link of its network path. Such pervasive per-flow provisioning (and associated signaling) is not sustainable in large-scale networks that support a dynamic population of E2E flows with guaranteed resources, and indeed proved fatal to the Integrated Services (IntServ) framework of the IETF.

Rate-Proportional Servers (RPSs) generally achieve the tightest upper bounds on E2E queuing latency within the class of WFQ schedulers. An RPS becomes a rate-limiting shaper if an eligibility condition is added to the search for the minimum timestamp that identifies the next flow to be served. A shaped RPS (SRPS) is also called a worst-case fair weighted fair queuing (WF2Q) scheduler because it minimizes the worst-case fairness index. For convenience of presentation, unless indicated otherwise, the broader WFQ denomination is used herein to refer specifically to the RPS class of minimum-latency WFQ schedulers and, similarly, WF2Q is used for designation of the SRPS class.

When the number of flows is large, just the search for the minimum timestamp is hard to complete within the short time between consecutive packet transmissions. The eligibility condition of WF2Q makes the search even more difficult. Methods have been proposed for simplifying the eligibility condition, but the implementation of the data structures involved is not trivial and forces a partial relaxation of the latency guarantees.

WFQ nodes can be combined in scheduling hierarchies for the segregation of bandwidth within subsets of flows based on administrative or topological criteria. If all of the nodes of the WFQ hierarchy are WF2Q instances, the worst-case latency penalty induced by every hierarchical layer is bounded and inversely proportional to the service rate of each flow, just like the worst-case latency of a single-node WFQ scheduler. The time complexity of the scheduling function grows linearly with the depth of the hierarchy and may limit it in high-speed links, where the time interval for the scheduling decision is extremely short.

The DiffServ framework of the IETF defines standardized codepoints in the IP packet header and corresponding PHBs that compliant nodes generally need to apply to incoming packets. The codepoints drive the placement of the packets in per-class first-in-first-out (FIFO) queues that are served in strict-priority order. The EF PHB of the top-priority queue is the only DiffServ PHB that can enforce local guarantees on queuing latency. The EF queue is shaped at a cumulative rate that is at least as large as the sum of the service rates required by all the EF flows that traverse the queue. The latency guarantee enforced per link by the EF PHB depends on the cumulative shaping rate of the local EF queue and on the cumulative service burstiness of the EF queues immediately upstream.

IETF DetNet focuses on services with hard guarantees on latency, packet loss, delay variation, and reliability. Besides considering existing solutions, such as chains of per-flow WFQ schedulers at every link of the data path, DetNet is also exploring the adaptation to large-scale networks of some of the IEEE TSN extensions of the 802.1Q bridging standard. One prominent example is the derivation of the cycle-specified queuing and forwarding (CSQF) scheme from the cyclic queuing and forwarding (CQF) scheduler of IEEE 802.1Qch. CSQF eliminates the CQF need for accurate network-wide synchronization, but at the cost of packet overhead (a new header field is required for indication of the service cycle that should forward the packet at the next node) and node latency. CSQF requires the network nodes to maintain tables that map the cycle labels carried by the packets onto the transmission cycles of the outgoing links. Any TSN-derived solution for large-scale networks also inherits from TSN the lack of differentiation in latency guarantees among flows that share the same FIFO queue and the complexity of updating the service schedules of all network links every time a new guaranteed-latency flow is established.

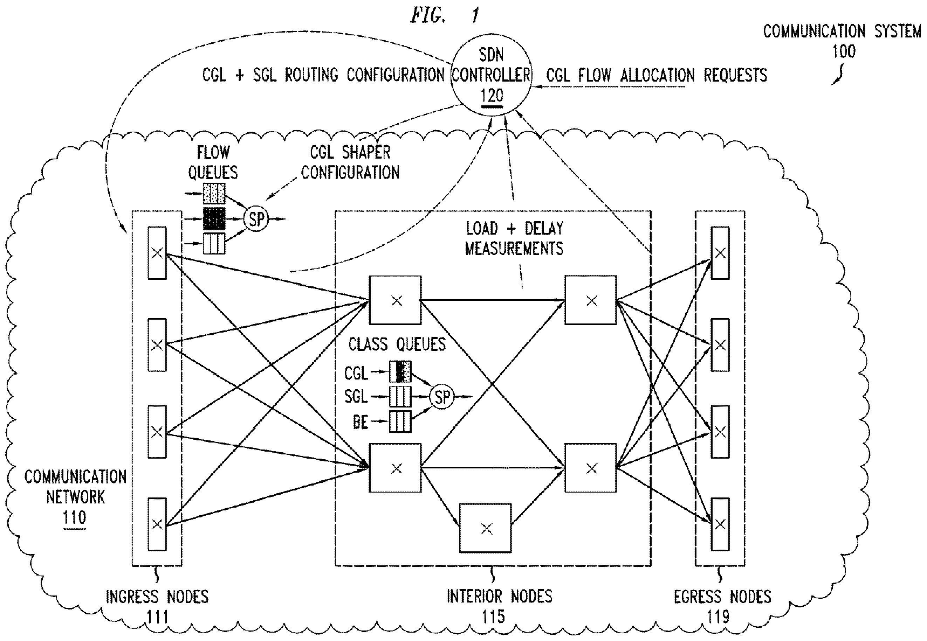

SD-GLN is a framework for the enforcement of E2E latency guarantees in networks of any size that are under a single administrative domain. Examples of networks for application of the framework include the Xhaul transport segments of mobile networks and data center networks, although it will be appreciated that the SD-GLN framework can be applied in various other contexts. An example embodiment of the SD-GLN framework is presented with respect to FIG. 1.

FIG. 1 depicts an example embodiment of a communication system configured to support guaranteed-latency networking using an SD-GLN framework.

As depicted in FIG. 1, communication system 100 includes a communication network (CN) 110 and a software defined networking (SDN) controller 120. It will be appreciated that the communication system 100 may be utilized to support communications in various contexts, such as in network provider networks (e.g., wireline networks, wireless networks such as 5G cellular networks or other types of wireless networks, and so forth), data provider networks (e.g. for supporting communications between servers based on leaf-spine topologies or other types of data center network topologies), enterprise networks, edge cloud networks, or the like, as well as various combinations thereof.

The CN 110 includes a set of ingress nodes 111, a set of interior nodes 115, and a set of egress nodes 119. The CN is configured to support traffic queuing based on use of the SD-GLN framework (e.g., namely, CN 110 may support three traffic classes - the continuous guaranteed-latency (CGL) class, the sporadic guaranteed-latency (SGL) class, and the best-effort (BE) class - for traffic queuing). The CGL, SGL, and BE traffic classes are illustrated with respect to the class queues and the associated shaper depicted as being associated with the interior nodes 115 (it will be appreciated that although for purposes of clarity only one set of class queues is depicted in FIG. 1, each of the nodes of the CN 110 may include class queues for the CGL, SGL, and BE classes). The queueing of CGL flows within the CGL class is illustrated with respect to the flow queues and the associated shaper depicted as being associated with the ingress nodes 111. It is noted that the shading in FIG. 1 illustrates that flows associated with the CGL class at the ingress node 111 flow into the CGL traffic class at the interior node 115.

The ingress nodes 111 are configured to support traffic queuing based on various traffic queuing techniques, including based on use of the SD-GLN framework (e.g., namely, the ingress nodes 111 may support three traffic classes - the continuous guaranteed-latency (CGL) class, the sporadic guaranteed-latency (SGL) class, and the best-effort (BE) class - for traffic queuing).

The SDN controller 120 is configured to receive flow allocation requests and network measurement information and to configure the ingress nodes 111 to support the requested flows based on the flow allocation requests and the network measurement information. For example, as illustrated in FIG. 1, the SDN controller 120 is configured to receive CGL flow allocation requests for CGL flows, receive load and delay measurements from the interior nodes 115 of the CN 110, and to provide CGL and SGL routing configuration information and CGL shaper configuration information to the ingress nodes 111 to support queuing of flows at the ingress nodes 111 before traversal of the flows over the interior nodes 115 to the egress nodes 119.

It will be appreciated that the CN 110 and the SDN controller 120 may be configured to support various other functions for supporting guaranteed-latency networking using an SD-GLN framework, at least some of which may be further understood by considering various aspects of the SD-GLN framework more generally as discussed further below.

The SD-GLN framework may be configured to support traffic classification and prioritization, traffic engineering, traffic management, and so forth.

The SD-GLN framework may be configured to support various traffic classification and prioritization functions.

The SD-GLN framework divides all traffic into three traffic classes served in strict priority order. From top to bottom, they are the continuous guaranteed-latency (CGL) class, the sporadic guaranteed-latency (SGL) class, and the best-effort (BE) class. A CGL flow has a guaranteed E2E latency, a controlled start time, and a known traffic profile. An SGL flow has a guaranteed E2E latency but lacks at least one of the two other properties of a CGL flow. Network control flows are also included in the SGL class. A BE flow has no guaranteed E2E latency. The BE class may be further subdivided into more classes, whose definition and handling are outside the SD-GLN scope. The E2E latency of a packet is measured as the time between its arrival at the ingress boundary node and its departure from the egress boundary node.

The SD-GLN framework may be configured to support various traffic engineering functions.

The SDN controller 120 provides routing and admission control decisions for CGL flows. The decisions apply to individual CGL flow allocation requests and are based on the bandwidth currently allocated to CGL traffic along the candidate path of every new flow. The criteria used by the SDN controller 120 for routing and admission control (e.g., load balancing versus load concentration) are omitted for purposes of brevity. Irrespective of the criteria, the SDN controller 120 does not allocate bandwidth to CGL flows beyond a fraction $\gamma$ of the link capacity C, with $\gamma \leq 1$.

Since the start time of SGL flows may not be controlled, SGL flows are not routed individually, but, rather, by a network-wide policy. No admission control can be applied because the traffic profile of an SGL flow is typically unknown. The dynamic configuration of the routing policy for the SGL class may be driven by real-time load measurements that the SDN controller 120 gathers periodically from the network links, with the goal of keeping the aggregate load of CGL and SGL traffic below a fixed fraction $\sigma$ of the link capacity ( $\gamma \leq \sigma \leq 1$). However, load control alone may not be sufficient to avoid the violation of the latency guarantees of SGL flows and, thus, latency measurements also may need to be included in the control loop that dynamically tunes the SGL routing policy.

The SD-GLN framework may be configured to support various traffic management functions.

The interior and egress nodes of the SD-GLN domain are not aware of the bandwidth allocations established by the SDN controller 120 for the CGL flows. The interior and egress nodes store packets in per-class first-in-first-out (FIFO) queues that are served in strict-priority order. The CGL queue is scheduled at the highest priority level, followed immediately by the SGL queue.

The ingress nodes of the SD-GLN domain serve packets of different classes in the same priority order used by the interior and egress nodes. However, within the top-priority CGL class, a per-flow shaper is instantiated instead of the single FIFO queue of the interior and egress nodes. The shaping rate associated with each flow coincides with the bandwidth allocated to the flow by the SDN controller. The shaper does not associate the CGL flows with respective token buckets, so the shaper does not allow for packet bursts to come out of the flow queues in excess of the shaping rates configured for the flow queues. Queuing arrangements alternative to a single FIFO queue may also be considered for SGL traffic in the ingress nodes (e.g., one SGL queue per network egress node).

The per-flow shaper of the ingress node supports a periodic service sequence (PSS) that assigns transmission timeslots to packet queues according to their shaping rate allocations and independently of their occupancy state. Every ingress link of the network serves its CGL flows through a dedicated instance of the PSS, which is updated each time the SDN controller admits a new CGL flow that enters the network through that link. The computation of the updated PSS is performed offline, by the SDN controller or by the ingress node itself, using a hierarchy of WF2Q schedulers (HWF2Q) that reflects the overall network topology (e.g., every scheduling node in the hierarchy has a corresponding link in the network).

In the PSS computation, the set of CGL flows is augmented with a virtual idle flow $f_0$ that is provisioned with the residual bandwidth $r_0$ of the ingress link (the residual bandwidth is the difference between the link capacity and the sum of the service rates allocated to all CGL flows that traverse the link: $r_0 = C - \Sigma_{i \in CGL} r_i$). The virtual idle flow is served directly by the top node in the scheduling hierarchy, without intermediate hierarchical layers. The presence of the virtual idle flow ensures that the overall behavior of the hierarchy is non-work-conserving (no CGL packet is transmitted during PSS slots that are assigned to the virtual idle flow) despite the operation of a work-conserving WF2Q instance (e.g., the WF2Q+ scheduler) at every node of the hierarchy.

The HWF2Q hierarchy is built from top to bottom starting from the links to the destination nodes of the flows and moving upstream one link at a time. In a network that offers multiple paths between ingress and egress nodes, such as a data center fabric, a link may carry traffic with different destinations and also traffic to the same destination that is split over multiple paths at a downstream node. In the construction of the HWF2Q hierarchy, that link maps onto a distinct scheduling node instance for every path to which it belongs. The shaping rate assigned to each instance is the sum of the shaping rates of the flows that traverse the corresponding network path. In the conventional operation of the HWF2Q hierarchy, the distribution of service to the multiple node instances associated with the same network link is determined independently within the respective branches of the hierarchy. Such absence of coordination between scheduling node instances of the same link may increase the burstiness of the packet arrivals to the CGL queue of the link and, therefore, contribute to the accumulation of queuing latency. Various example embodiments for supporting guaranteed-latency networking may be configured to support mitigation of this source of latency.

Various example embodiments for supporting guaranteed-latency networking may be configured to support various enhancements for supporting the CGL class in the SD-GLN framework, such as PSS computation for shaping hierarchy, PSS operation with variable-sized packets, latency bounds and shaping rate selection, flow bundling, mitigation of node duplication in the shaping hierarchy, or the like, as well as various combinations thereof. It is noted that, although various enhancements for supporting the CGL class in the SD-GLN framework are described, at least some such enhancements for supporting the CGL class in the SD-GLN framework also may have beneficial effects on the SGL class in the SD-GLN framework.

Various example embodiments for supporting guaranteed-latency networking may be configured to support the CGL class in the SD-GLN framework based on use of PSS computation for the shaping hierarchy.

The PSS computation is executed offline using knowledge of the set of CGL flows that traverse the ingress link, inclusive of their shaping rates and network paths. The shaping hierarchy is built by combination of the network paths of the flows. When two links of the same path carry identical sets of flows, only one link needs to be represented in the shaping hierarchy.

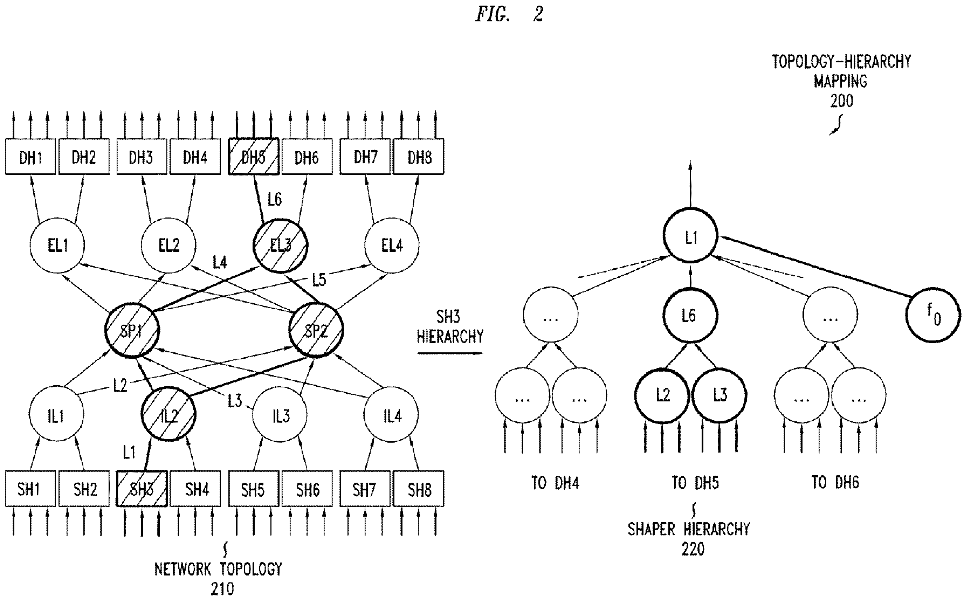

FIG. 2 depicts an example embodiment of a topology-hierarchy mapping for a network topology of a leaf-spine data center for illustrating construction of a shaping hierarchy configured to support guaranteed-latency networking using an SD-GLN framework.

In FIG. 2, a topology-hierarchy mapping 200 for an ingress link in a leaf-spine data center is depicted. The leaf-spine data center fabric is built with 4x4 packet switches. The leaf-spine data center fabric consists of four leaf and two spine switches and serves eight hosts.

In the network topology 210 on the left-hand side of FIG. 2, the fabric topology is unfolded and all links are unidirectional. The SH prefix in the node label designates the source hosts that originate the CGL flows. DH stands for destination host, IL and EL identify ingress and egress leaves, respectively, and SP is the spine prefix. In the actual fabric, leaves ILx and ELx coincide, just like hosts SHy and DHy. The data paths between SH3 and DH5 are highlighted, with incremental numbering of the links involved.

In the shaper hierarchy 220 on the right-hand side of FIG. 2, the portion of the SH3 shaping hierarchy that handles the CGL flows destined for DH5 is highlighted. Only two of the other seven branches of the shaping hierarchy (one per destination host) are shown besides the DH5 branch. In the shaping hierarchy, the top node of each branch corresponds to the link between the egress leaf and the destination host (L6 in the case of DH5). The layer immediately below corresponds to the two links that originate at the ingress leaf that serves SH3 (IL2). The links between the spines and the egress leaf do not need to be represented in the shaping hierarchy, because the spines do not aggregate nor separate the flows of the respective network paths that are destined for DH5 (in other words, if a scheduling layer was added to the L6 branch for those links, its nodes would each serve only one node from the lower layer).

Once the structure of the hierarchy is defined, each node i is provisioned with a shaping rate $r_i$ that is exactly the sum of the shaping rates of the nodes it serves. The virtual idle flow $f_0$ is served directly by the top node of the hierarchy, so that the sum of the rates allocated at the top layer of the hierarchy always equals the link capacity C.

The offline execution of the hierarchical shaping algorithm for computation of the PSS assumes that all flows, including the virtual idle flow, are always busy with packets. As a consequence, every node in the hierarchy is always ready to be selected by its parent node. All packets are assumed to have identical size, corresponding to the fixed duration of the PSS timeslot. The HWF2Q algorithm associates each node i (including the flows at the bottom of the hierarchy) with a starting potential $S_i$ and a finishing potential $F_i = S_i + 1/\rho_i$, where $\rho_i = r_i/C$ is the service rate of node $i$ normalized to the link capacity. After node $i$ is visited $k$ times by the respective scheduler, its starting potential is $S_i^{k+1} = F_i^k$ and its finishing potential is $F_i^{k+1} = S_i^{k+1} + 1/p_i$.

The starting potential $S_i$ of node $i$ provides the system potential for its child nodes. When node i is selected for service by its parent node, its system potential restricts the set of its child nodes that can be considered for receiving the same service: only the child nodes $j$ such that $S_j \leq S_i$ are eligible for service. Within the set of eligible nodes, the one with the minimum finishing potential is selected for service. The shaper proceeds the same way from top to bottom of the hierarchy until it finds a leaf node (flow). The identifier of the flow is then assigned to the current PSS timeslot and the scheduler proceeds to a new flow selection for the next timeslot. Since the service rate of a parent node is equal to the sum of the service rates of its child nodes, the parent node can always find at least one child node that is eligible for service.

The PSS will be updated when new flows are provisioned on the ingress link with their throughput and delay guarantees. When provisioned flows are decommissioned, a PSS update is not strictly necessary but may help reduce the average E2E latency. An updated PSS may be installed by incremental replacement of the existing timeslot assignments to the flows, establishing the new assignments right before the respective timeslots are visited by the scheduler. Another possibility is to maintain two PSS instances, one in active mode and the other in standby mode, and then activate the standby sequence right after it is refreshed with the latest update.

Various example embodiments for supporting guaranteed-latency networking may be configured to support the CGL class in the SD-GLN framework based on use of PSS operation with variable-sized packets.

The PSS is an array of timeslots, where each timeslot provides service opportunities to a flow. Every time the network link becomes available for transmission of a packet, the scheduler identifies the timeslot corresponding to the current time and determines if the timeslot is assigned to a flow. If a flow is found and its queue is currently not empty, the flow is served; otherwise, the service opportunity is relinquished by the PSS and passed to the SGL class.

The duration T of a PSS timeslot will be at least as long as the time required for transmission of the largest packet handled by the ingress link. The delay guarantees enforced by the scheduler grow linearly with $T$: the WF2Q eligibility condition ensures that the maximum distance between consecutive timeslots assigned to flow $i$ with normalized service rate $\rho_i$ is $d_i^{max} = 2/p_i$ in timeslot units and $D_i^{max} = 2T/p_i$ in time units. Such distance approximates the worst-case scheduling latency of the PSS (the actual value may be marginally larger due to the discrepancy between packet and timeslot size). The minimum length, or period, of the PSS is set by the ratio between the link capacity and the minimum service rate supported by the scheduler (e.g., the PSS contains 10,000 timeslots if the link capacity is 10 Gb/s and the minimum service rate is 1 Mb/s).

In this manner, the PSS provides a pre-computed scheduling sequence. The 802.1ch and 802.1Qbv extensions of the IEEE 802.1Q standard for bridged networks are also instances of scheduling frameworks based on a pre-computed service sequence. Compared to the 802.1Q extensions, the PSS of SD-GLN (a) adds the ability to fully utilize the link capacity (by allowing packet transmissions to cross the boundary between contiguous timeslots), (b) expands indefinitely the set of flows and respective queues that it serves (instead, the time-aware shaper of 802.1Qbv only serves up to eight queues and the cyclic queuing and forwarding shaper of 802. 1Qch only serves two), and (c) seamlessly integrates with a secondary scheduler for distribution of excess bandwidth (the strict-priority scheduler that serves the SGL and BE classes) without loss of service continuity (instead, the 802.1Q extensions may interrupt the transmission of a lower-priority packet if it starts in proximity of the timeslot boundary).

By allowing the transmission of a packet to cross the boundary between two timeslots, the PSS of SD-GLN creates a temporary imbalance in the distribution of service to the respective flows. The PSS corrects the imbalance by associating each flow with a credit counter that enforces service fairness between flows within few visits to each flow. The credit counter of each flow $i$ is maintained and used as follows: (a) every service visit to the flow increments its credit counter by the time elapsed since the previous check or service, (b) every packet transmission decrements the credit counter by the ratio between the size of the transmitted packet and the service rate $r_i$ of the flow, (c) the credit counter is initialized and capped at the ratio $T/\rho_i$ between the timeslot duration and the normalized rate of the flow, and (d) a flow is served only if its credit counter is not negative. To accelerate the re-balancing of service opportunities, when the flow of the current timeslot cannot be served because it is empty or has negative credits, the PSS tries first to serve the flow of the next timeslot. If that flow also cannot be served (e.g., because its queue is empty, has negative credits, or the timeslot is assigned to the virtual idle flow $f_0$), the PSS passes the service opportunity to the first lower-priority class whose FIFO queue is not empty.

Various example embodiments for supporting guaranteed-latency networking may be configured to support the CGL class in the SD-GLN framework based on use of latency bounds and shaping rate selection.

An upper bound on E2E queuing latency for the CGL flows of the SD-GLN framework is conjectured and compared with the tightest bound achievable on a network path of WFQ nodes. The bounds drive the selection of the service rate that a flow will be allocated in the respective schedulers for satisfaction of its E2E latency requirement. Begin with the WFQ bound. A network path of $N_i$ WFQ-controlled links guarantees the following bound on the E2E queuing latency for a flow i whose source is regulated by a token bucket with token arrival rate $r_i$ (same as the guaranteed rate of the flow at every link) and bucket size $\sigma_i$:

$$D_i^{N_i,WFQ} = \frac{\sigma_i}{r_i} + N_i\left(\frac{L_i}{r_i} + \frac{L_{max}}{C}\right) \quad (1)$$

In Eq. (1), it is assumed that all $N_i$ links in the network path of flow $i$ have identical capacity $C$ and handle packets with identical maximum size $L_{max}$. $L_i$ is the maximum size of a packet of flow $i$. The bucket size is null ($\sigma_i = 0$) for constant-bit-rate (CBR) flows (such as most CGL flows in typical SD-GLN applications). Since $L_i \leq L_{max}$ and, in most cases, $r_i \ll C$, the term $L_{max}/C$ is generally negligible compared to $L_i/r_i$, so that for a CBR flow the bound is inversely proportional to the guaranteed rate. The bound of Eq. (1) also holds when the WF2Q eligibility condition is added to any of the nodes in the network path.

The WFQ bound has already been proven rigorously, first for the packet-by-packet version of GPS (P-GPS), and then for the entire RPS class using the theory of latency-rate servers. In the case of SD-GLN, a conjecture for the E2E latency bound of CGL flows is provided and then corroborated with a variety of experimental results.

Conjecture. In an SD-GLN network, the following bound holds on the E2E queuing latency of a constant-bit-rate CGL flow $i$ that receives a service rate $r_i$ from an ingress PSS with capacity $C_1$ and timeslot duration $T_1$:

$$D_i^{CGL} = \frac{2T_1C_1}{r_i} + \sum_{j=1}^{N_{in,i}} \frac{2T_jC_j}{C_x^{i,j}} + \sum_{k=1}^{N_i} \frac{L_{max,k}}{C_k} \quad (2),$$

where:

$N_{in,i}$ is the number of network ingress links with flows that share at least one interior network link with flow $i$;
$N_i$ is the number of links in the network path of flow $i$;
$T_j$ is the timeslot duration in the PSS of ingress link $j$;
$C_j$ is the capacity of ingress link $j$;
$C_x^{i,j}$ is the smallest capacity within the set of network links that are shared by flow $i$ and any of the flows from ingress link $j$;
$C_k$ is the capacity of link $k$; and
$L_{max,k}$ is the maximum packet size accepted by link $k$.

When all the links have identical capacity C and maximum packet size $L_{max}$, and all ingress links have identical duration $T$ of the PSS timeslot, the bound of Eq. (2) is as follows:

$$D_i^{CGL} = 2T\left(\frac{C}{r_i} + N_{in,i}\right) + N_i\frac{L_{max}}{C} \quad (3)$$

Rationale. The term $2T_1/C_1$ in Eq. (2) is the worst-case latency of a CBR flow $i$ ($\sigma_i = 0$) in a WF2Q instance implemented with PSS. When $r_i < C_1/2$, the maximum time distance between consecutive timeslots assigned to flow i is $2TC_1/r_i$. Accordingly, a packet that arrives right after missing the service from the first timeslot is delayed by at most the same amount $2TC_1/r_i$. Since $TC > L$; and $L_{max}/C \ll L_i/r_i$, this first term of the conjectured bound is at least twice as large as $D_i^{1,WFQ} = L_i/r_i + L_{max}/C$, which is the bound for a conventional, non-hierarchical WF2Q shaper on a single link.

The term $\sum_j 2(T_j C_j)/C_x^{i,j}$ is from CGL flows that collide with flow *i* at the interior links of the network. The hierarchy of the ingress shapers ensures that no more than the packet-length worth of two consecutive timeslots can arrive to an interior link without interruption from each ingress node. Due to the spacing between services given to each node in the shaping hierarchy, it is also expected that an ingress link *j* produces a two-timeslot collision with a packet of flow *i* at only one interior link in its data path, hence the single contribution to Eq. (2) from each ingress link with overlapping flows.

The last term is from lower-priority packets that may be already in transmission when the CGL packets of the first and second terms arrive to the link. Strict-priority scheduling ensures that only one such packet can contribute to the latency bound for each link in the network path of the CGL flow.

The WFQ bound of Eq. (1) expresses inverse proportionality between the service-rate and queuing-latency guarantees of a flow. The same type of relationship exists in the SD-GLN bound of Eq. (2) and Eq. (3) only when the first term is much larger than the second and third terms (e.g., when the service rate is small and the latency is large). With larger service rates and tighter latency bounds the FIFO nature of the CGL queues in the interior links dominates over the queuing latency of the ingress shaper.

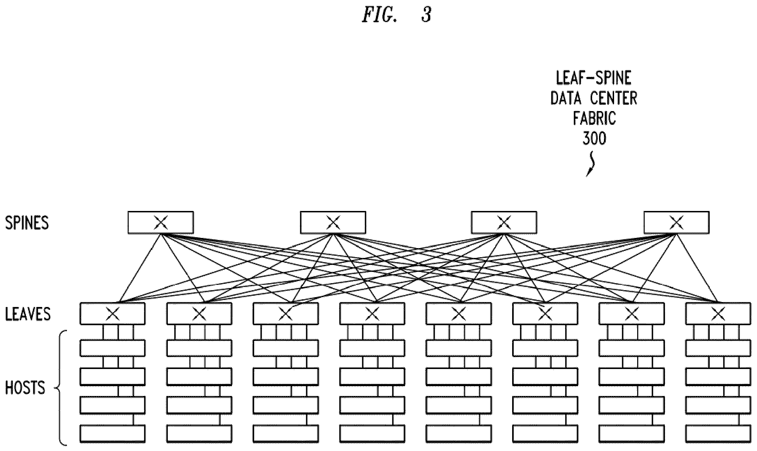

The request to the SDN controller for allocation of a CGL flow i includes a throughput guarantee $\theta_i$ and a queuing latency guarantee $\lambda_i$. The bound $D_i^{CGL}$ can be computed after the routing function chooses the path of flow *i* and, thus, identifies the set of ingress links that may include flows that overlap with flow *i* in at least one interior link (unless restrictions are applied to the routing function, it can be assumed that all ingress links of the SD-GLN network can include flows that overlap with flow *i* in at least one interior link). If $D_i^{CGL}$ is smaller than $\lambda_i$ when $r_i = \theta_i$, the flow is called throughput-driven (TD) and its $(\theta_i, \lambda_i)$ guarantees can be enforced by allocation of a service rate $r_i = \theta_i$ at the ingress link of flow *i.* If, instead, the bound exceeds the queuing latency requirement, the flow is called latency-driven (LD) and will be allocated a service rate $r_i > \theta_i$. As an example, consider a flow *i* in a leaf-spine data center fabric, as presented with respect to FIG. 3.

FIG. 3 depicts an example embodiment of a leaf-spine data center fabric for illustrating support for flows based on guaranteed-latency networking using an SD-GLN framework.

In FIG. 3, a leaf-spine data center fabric 300 is depicted. The leaf-spine data center fabric 300 which includes four spine switches, eight leaf switches, and thirty-two end hosts.

As an example, consider a flow *i* with $(\theta_i, \lambda_i)$ = (100 Mb/s, 50 μs) in the leaf-spine data center fabric of FIG. 3. All fabric links have identical capacity C = 40 Gb/s and the PSS of all ingress links has a timeslot duration T = 320 ns (or 1.6 kB of packet-length worth). The bound of Eq. (3) can be applied to this case and determines that flow *i* is latency-driven ( $D_i^{CGL} = 276\ \mu s > \lambda_i$). In order to meet the latency requirement $\lambda_i$ = 50 μs, the service rate of the flow should be raised to at least $r_i$ = 849 Mb/s, or about 8.5 times the throughput requirement $\theta_i$ of the flow.

CGL flows are typically LD flows in practical applications (e.g., the robotic motion control use case discussed above). Since the queuing latency requirement of these flows is much lower than the cycle time, satisfaction of the latency requirement implies that never more than one packet is in transit in each direction at any time. Trying to enforce a bound on E2E jitter that is lower than the queuing latency bound, as targeted by most TSN solutions, is pointless for these flows, because the receiving buffer will never have to hold more than one packet.

Various example embodiments for supporting guaranteed-latency networking may be configured to support the CGL class in the SD-GLN framework based on use of flow bundling.

As opposed to $D_i^{N_i,WFQ}$, the $D_i^{CGL}$ latency bounds of Eq. (2) and Eq. (3) do not reflect the maximum packet size $L_i$ of flow *i.* This way, the flow cannot benefit from a lower latency bound if its maximum packet size is much smaller than the byte size of the timeslot (e.g., with $L_i$ = 256 B the WFQ bound is more than six times smaller than the bound with $L_i$ = 1.6 kB; instead, $D_i^{CGL}$ remains the same). The ultimate effect of the independence between $D_i^{CGL}$ and $L_i$ is the inflation of the service rate that needs to be allocated to flow *i* for satisfaction of its latency requirement, and therefore a reduction of the portion of network capacity that CGL flows can utilize overall.

Various example embodiments may be configured to support translation of a smaller packet size into a lower latency (or, conversely, a smaller guaranteed service rate) when the PSS is used for implementation of the ingress shaper. Keeping the example of a flow *i* with $(\theta_i, \lambda_i)$ = (100 Mb/s, 50 μs), and assuming now a maximum packet size of 256 B (6.25 times smaller than the 1.6 kB size of the PSS timeslot), the packet inter-arrival time is 20.48 μs. It is noted that all packet sizes may be defined with respect to the time that the packets require for transmission over the network interface, including any preamble, trailer, and inter-packet gap specified by the link layer standard. With the allocated service rate $r_i$ = 849 Mb/s, the average time between service opportunities offered by the PSS is 15.08 μs.

It is noted that there is no degradation of the latency guarantees of flow *i* if other flows are allowed to share service opportunities in the same timeslots that are assigned to it, as long as the total amount of bits to be transmitted does not exceed the bit size of the timeslot. Five other flows with the same 256 B packet size can be bundled with flow *i* in this particular case. Given the hierarchical nature of the PSS computation, the flows that share the same timeslot will also be required to have identical network paths. When six such flows are bundled in the same timeslot, the average service rate allocated per flow is about 141.5 Mb/s, which is only 41.5% larger than the throughput requirement and 13.5% smaller than the 163.8 Mb/s allocation required by the WFQ bound over the four-hop network path.

The aggregation of LD flows into bundles takes place before the computation of the PSS and may be based on the following rules:

(1) The flows in a bundle travel to the same egress node through the same network path and have the same latency requirement.

(2) Each LD flow *i* has a declared maximum packet size $L_i$, the sum of the maximum packet sizes of the flows of a bundle cannot exceed the PSS timeslot size (any larger packet arriving to a flow queue is immediately dropped), and, if the addition of a new flow is deemed to overflow the timeslot size, the new flow is placed in a new bundle.

(3) When a bundle J is created with its first LD flow $J_1$, the service rate of the bundle is set to the service rate $r_J$ needed for support of the latency requirement $\lambda_J$ of the flow. When the k-th flow is added to the bundle, the sum of the throughput requirements of the flows currently assigned to the bundle ( $\sum_{m=1}^{k} \theta_m$ ) may exceed $r_J$. If that happens, the service rate of the bundle becomes the sum of the throughput requirements: $r_j = \sum_{m=1}^{k} \theta_m$ .

The bundle creation process is repeated before every update of the PSS, so that the number of bundles is always minimal. The timeslots of the PSS contain pointers to bundles with a single TD flow and to bundles of one or more LD flows. When an LD bundle is selected for service, the bundle serves its flows in round-robin order. Every bundle maintains credit counters for its flows and only serves flows with non-negative credits. The flow credits prevent individual flows from consuming excessive amounts of timeslot credits when a timeslot serves a bundle in excess of its configured duration. A credit counter is associated with every bundle and maintained the same way as described above for flows that are directly included in the PSS before the bundling feature is introduced.

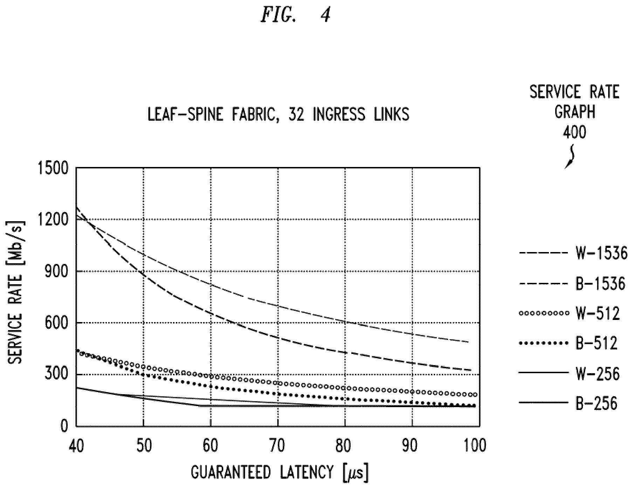

FIG. 4 depicts the service rate that WFQ and SD-GLN bounds require to allocate to the flows of the leaf-spine data center fabric of FIG. 3. More specifically, FIG. 4 depicts a service rate graph 400 that illustrates the service rate that the WFQ and SD-GLN bounds require to allocate to the flow of the example of FIG. 3 for the satisfaction of its requirements (namely, the (100 Mb/s, 50 μs) requirmenets), in the example leaf-spine data center fabric with four spine switches, eight leaf switches, and thirty-two end hosts (with the link capacity being 40 Gb/s everywhere) of FIG. 3. The curves are plotted for link-layer packet sizes of 256 B, 512 B, and 1536 B (the W-x curves are for the WFQ bound and the B-x curves are for the SD-GLN bound). The SD-GLN values assume that the bundle of the flow is fully loaded with identical flows. The B-1536 curve also represents the PSS case without bundles, for all packet sizes. Besides highlighting the benefits of the bundling solution, with major gains over the plain operation of the PSS with only one flow served per timeslot, the plot shows that the conjectured SD-GLN bound, if confirmed, can enable network utilization levels that are often better than those of the WFQ bound.

Various example embodiments for supporting guaranteed-latency networking may be configured to support the CGL class in the SD-GLN framework based on use of mitigation of node duplication in the shaping hierarchy.

In any network that presents multiple paths between source and destination endpoints, some network nodes may both separate traffic with a common destination and aggregate traffic with multiple destinations into a common link. The outgoing links of those nodes that carry traffic to multiple destinations end up being mapped onto shaping nodes in multiple branches of the shaping hierarchy. This multiplication of shaping nodes for a single link may increase the traffic burstiness at that link if the shaping algorithm handles the nodes independently, without consideration of their common topological peer.

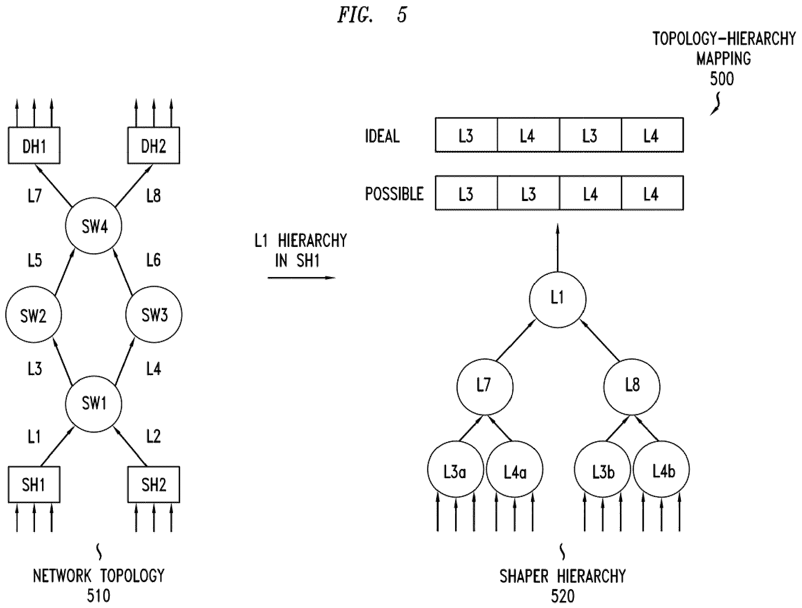

FIG. 5 depicts an example embodiment of a topology-hierarchy mapping for a network including a network node that separates traffic to a common destination and aggregates traffic to multiple destinations.

In FIG. 5, a topology-hierarchy mapping 500 for a portion of a network, including a network node that separates traffic to a common destination and aggregates traffic to multiple destinations, is depicted.

In the network topology 510 on the left-hand side of FIG. 5, a network node (SW1) with two outgoing links (L3 and L4) aggregates traffic to multiple destinations (DH1 and DH2) into the two outgoing links but also separates traffic to a single destination (e.g., DH1) into the two outgoing links.

In the shaper hierarchy 520 on the right-hand side of FIG. 5, because of the traffic separation, the two links are individually mapped onto the hierarchy branches of the two destinations, so that two shaping nodes are included in the overall hierarchy for each of the two links. In the given topology, links L5 and L6 do not need to be mapped onto the hierarchy because they carry the same sets of flows as links L3 and L4, respectively. If the two nodes associated with link L5 are scheduled independently in the hierarchy branches of DH1 and DH2, it is possible that they are placed in contiguous (or at least relatively close) slots of the PSS, with a relatively large gap before the next placement. This may lead to larger queuing delays in the interior nodes of the network. Ideally, services assigned to cousin nodes (e.g., shaping nodes derived from the same network link) should be spaced at regular intervals within the PSS.

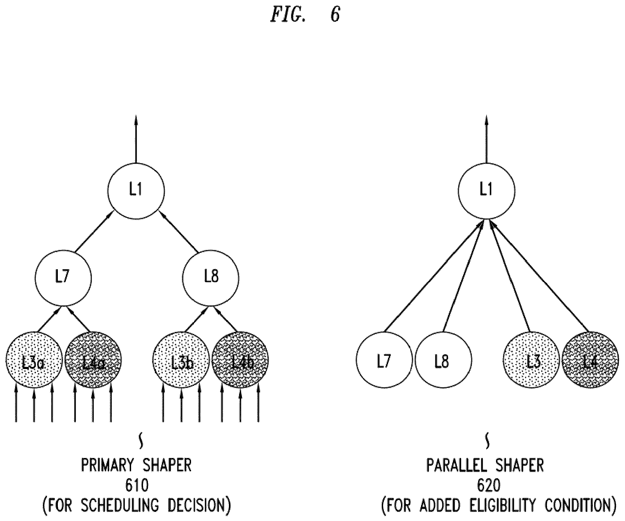

To coordinate the scheduling of cousin nodes in the computation of the PSS, the hierarchical shaping algorithm may be augmented with an additional eligibility condition. A parallel, flat shaper, where all network links are represented by a single leaf node, is configured. Every node in the primary shaper maps onto the node of its physical link in the parallel shaper. The shaping rate of each leaf node in the parallel shaper is the sum of the shaping rates of its corresponding nodes in the primary shaper. In order to be considered for selection by its parent node, a node in the primary hierarchical shaper needs to be eligible for service and its corresponding node in the parallel shaper also needs to be eligible for service. When a PSS timeslot is assigned to a flow, every node in the branch of the shaping hierarchy that includes the flow has its starting and finishing potentials updated based on its service rate. At the same time, every corresponding node in the parallel shaper also has its starting potential updated based on its own rate (the finishing potential of the parallel node has no role in the selection). The additional eligibility condition from the parallel shaper contributes to evening out the spacing between services that are assigned to cousin nodes, thereby reducing the burstiness of the packet arrivals to the network links. FIG. 6 depicts an example embodiment of primary and parallel shapers for the network topology of FIG. 5. In FIG. 6, the shading of the L3 and L4 nodes in the primary shaper 610 and the parallel shaper 620 reflects their mapping. As indicated in FIG. 6, the primary shaper 610 is used for a scheduling decision while the parallel shaper 620 is used for an added eligibility condition.

Various example embodiments for supporting guaranteed-latency networking which are presented herein may be further understood by considering various experimental results. The experimental results are obtained from an ns-3 simulation of the data center fabric of FIG. 3. The ns-3 platform was extended with modules that provide VLAN switching with class-based priority queues, explicit routing per flow (by VLAN ID designation of the spine switch in the path), and the scheduling features of the SD-GLN framework. The data center fabric is only one of the many large-scale network contexts where the SD-GLN framework can find application, and is used in the experiments because it presents the key network features that call for the various capabilities of SD-GLN, including multi-path routing.

As discussed further hereinbelow, the first set of experiments is related to beyond overprovisioning. The first set of experiments demonstrates that strict-priority scheduling of per-class FIFO queues throughout the network is not sufficient to enforce deterministic guarantees on E2E latency, even under heavy overprovisioning of bandwidth resources. Per-flow shaping is necessary at the ingress nodes, represented by the network interface cards (NICs) of the compute hosts in the data center case, but is done hierarchically and with the augmentation of the hierarchical shaping algorithm as described hereinabove.

Experiment 1 is configured as follows. Every host in the data center except H01 originates 52 CGL flows destined for each of the 28 hosts that are attached to leaf switches different than its own. Routing-wise, the 52 flows are evenly distributed over the 4 spine switches. Each flow has a CBR of 4.75 Mb/s, measured at layer 2 with inclusion of the Ethernet inter-frame gap (including the gap, every frame is 1534 B). As a result, each source host H02-H32 generates a total of 6.92 Gb/s, or 17.3% of the 40 Gb/s NIC capacity. Host H01 instead originates 48 CBR flows (95 Mb/s each) destined for H05 (the first host attached to leaf L02), all routed through spine S01, and a total of 1404 flows at 1.9 Mb/s each that are destined for the hosts not attached to its same leaf L01. The total load out of H01 is 7.23 Gb/s, or 18.1% of the NIC capacity. The 95 Mb/s flows have a maximum E2E queuing latency requirement of 36 $\mu$s and Ethernet frame size of 256 B. All other flows have a latency requirement in the millisecond range.

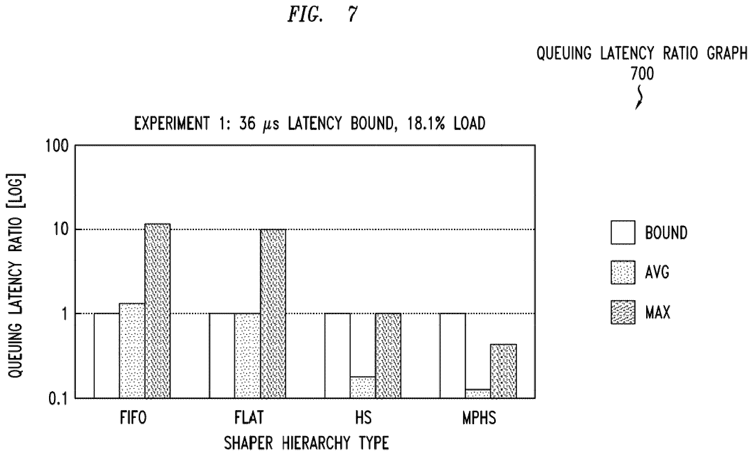

The 40 Gb/s links are each configured with 8 MB packet buffers that yield a maximum queuing delay of about 1.6 ms. The buffer size is much larger than what is typically found in off-the-shelf commodity hardware for switches and routers (e.g., about 100 $\mu$s). The packet buffers are oversized to better observe the performance implications of different configuration options for the ingress link scheduler, especially those options that would cause frequent packet losses in buffers that are sized more realistically. Additionally, the service rate allocation for the CGL flows in the ingress shapers also is overprovisioned by about 5% (e.g., 100 Mb/s service rate for the 95 Mb/s flows, 5 Mb/s for the 4.75 Mb/s flows, and 2 Mb/s for the 1.9 Mb/s flows). This small overprovisioning of the service rate is intended to protect the flows from temporary starvation that could otherwise originate from the occasional re-balancing of the queue credits in the PSS. The average and maximum E2E queuing latency for the 95 Mb/s flows are measured and plotted in logarithmic scale as a ratio over the 36 $\mu$s target, and the results are presented with respect to FIG. 7.

FIG. 7 depicts results of the first experiment, illustrating bound, average, and maximum queuing latency ratios for various schedulers. More specifically, FIG. 7 depicts a queuing latency ratio graph 700 that shows the results with per-class FIFO queue (FIFO), flat shaper (FLAT), hierarchical shaper (HS), and hierarchical shaper with multipath awareness (MPHS) as described hereinabove. In the three cases with ingress shaper (FLAT, HS, MPHS), the 95 Mb/s latency-driven flows are bundled together as described hereinabove. Without flow bundling, each of the 48 flows would require a shaping rate of 1.6 Gb/s, for a total of 48×1.6 = 76.8 Gb/s, almost twice the capacity of the ingress NIC. By contrast, bundling of the same flows (in 8 bundles) drops their cumulative rate requirement down to 8 × 1.6 = 12.8 Gb/s, which easily fits within the NIC capacity of the originating host, even after adding the 2.81 Gb/s allocated cumulatively to the 1404 background flows of the same NIC. FIG. 7 shows that the FIFO and FLAT schedulers exceed the latency target with both the maximum and the average metric. The conventional hierarchy (HS) improves both metrics substantially, with the maximum latency right at the target level. The augmented hierarchy (MPHS) outperforms all other options and keeps the maximum delay well below the target.

Experiment 2 keeps the flow distribution of Experiment 1, but scales down the bit rate of the 48 LD flows from H01 (now 9.5 Mb/s) and of all flows from hosts H02-H32 (now 1.9 Mb/s). The resulting loads on the ingress links are 7.81% and 6.92%, respectively.

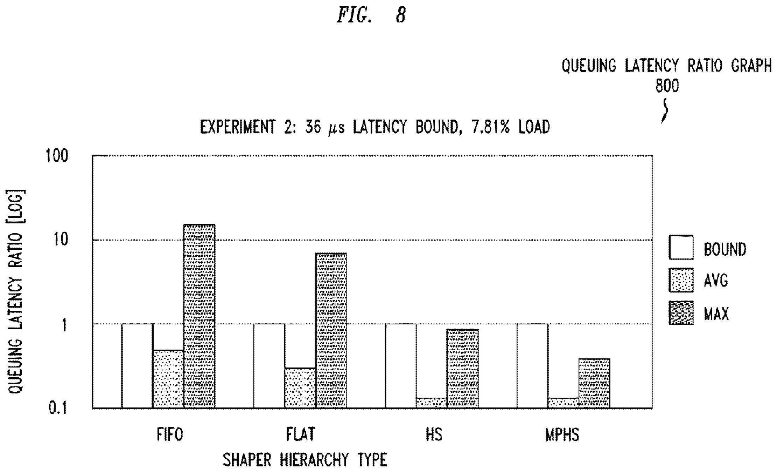

FIG. 8 depicts results of the second experiment, illustrating bound, average, and maximum queuing latency ratios for various shaper hierarchy types. More specifically, FIG. 8 depicts a queuing latency ratio graph 800 that shows that the load reduction benefits the average latency of FIFO (from 50.4 μs to 15.8 μs), but not its maximum latency (435 μs in both experiments). This is because the size of the largest burst in front of a link depends on the number of CBR flows that load the link and not on their aggregate rate, marginalizing the effects of overprovisioning.

As discussed further hereinbelow, the third and fourth experiments are related to delay bound validation.

Experiment 3 validates the SD-GLN ability to enforce the latency bound of Eq. (3). This experiment begins again from the flow distribution of Experiment 1, and then scales up the load contribution of the flows from hosts H02-H32 and replaces the 48 LD flows of Experiment 1 with smaller groups of CBR flows with a broad range of transmission rates. For each group, the average and worst-case latency are measured and compared with the bound of Eq. (3). Specifically, the rate of all flows from H02-H32 is set at 9.5 Mb/s, and the respective ingress links are loaded at 34.6% of their capacity. Next, the rate of the background flows from host H01 also is set at 9.5 Mb/s. The Ethernet frame size for all 9.5 Mb/s flows is 1534 B. Finally, within H01, 8 groups of 6 flows are configured with the following rates: 1900 Mb/s, 950 Mb/s, 475 Mb/s, 237 Mb/s, 118 Mb/s, 59 Mb/s, 29 Mb/s, and 14 Mb/s, with target E2E queuing latencies of 22 μs, 24 μs, 28 μs, 36 μs, 52 μs, 84 μs, 148 μs, and 276 μs (the corresponding 6-flow bundles are allocated 12.8 Gb/s, 6.4 Gb/s, 3.2 Gb/s, 1.6 Gb/s, 0.8 Gb/s, 0.4 Gb/s, 0.2 Gb/s, and 0.1 Gb/s, respectively, when H01 runs an ingress shaper). The Ethernet frame size for these flows is 256 B. The resulting load on the H01 ingress link is 36.0 Gb/s, or 90.1% of the 40 Gb/capacity, with a total 39.54 Gb/s service rate allocated in the shaper (98.85% of capacity).

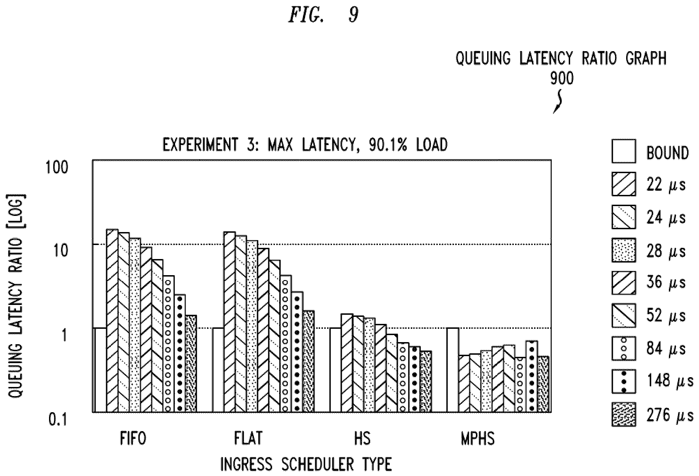

FIG. 9 depicts results of the third experiment, illustrating queuing latency ratios for various ingress scheduler types. More specifically, FIG. 9 depicts a queuing latency ratio graph 900 showing that both FIFO and FLAT exceed the latency bound by more than one order of magnitude for the most demanding flows. HS improves the performance substantially but fails to keep the latency within the bound for four sets of flows. MPHS, instead, comfortably meets the queuing latency requirement for all flows (the improvement over HS is threefold for the most demanding flows).

Experiment 4 shows that only MPHS enforces compliance with the SD-GLN bound of Eq. (3), by expression of the linear dependency of the measured maximum latency on the number of ingress hosts that originate flows with network path that overlaps with that of the monitored flows. No other scheduler exhibits the same consistency with the SD-GLN bound.

Experiment 4 begins with the same flow population as Experiment 3 and in subsequent runs moves flows from high-index hosts to low-index hosts (e.g., from H32 to H03, from H31 to H04, and from H19 to H16). The total number of flows in the network is the same in each case, as is the number of flows on the network path of the flows with monitored latency. However, the number of ingress hosts that generate flows that overlap with the monitored ones drops from 31 to 17 in subsequent runs (in every subsequent run we move flows from two additional ingress hosts, so that including H01 the runs present a total of 18, 20, ..., 32 active ingress hosts).

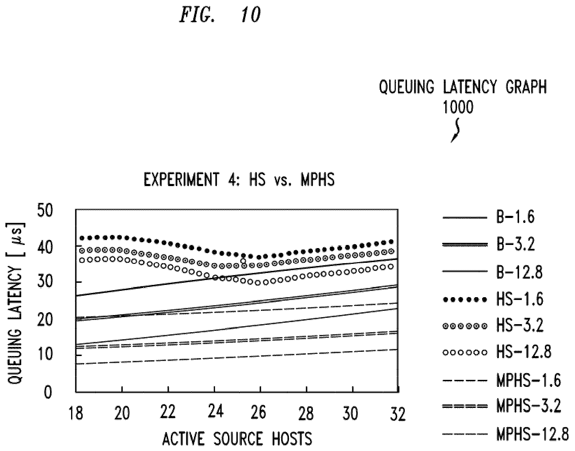

FIG. 10 depicts results of the fourth experiment, illustrating queuing latency ratios for various ingress scheduler types. More specifically, FIG. 10 depicts a queuing latency graph 1000 that plots the SD-GLN bound and the maximum latency measured with the HS and MPHS shapers for flows in the 12.8 Gb/s, 3.2 Gb/s, and 1.6 Gb/s bundles. With MPHS the maximum latency of all bundles complies with the respective bound and grows linearly with the number of active hosts (although not as fast as the bound). With HS, instead, the evolution of the maximum latency does not exhibit a monotonic trend, indicating that the shaper falls short of achieving the primary design goal of the shaping hierarchy. While these results are not conclusive proof that the bound of Eq. (3) is accurate, the results do indicate that it is highly plausible and emphasize the robustness of SD-GLN under link utilization levels (90% of capacity) that cannot be nearly sustained by any pre-existing solution.

Various example embodiments are configured to support SD-GLN, which is a lightweight framework for the enforcement of tight bounds on E2E queuing latency in packet networks of any size. As opposed to the solutions of established or proposed standards, SD-GLN does not require network-wide synchronization, scheduler coordination, or new packet headers. It can be implemented today with off-the-shelf equipment, leveraging the programmability of existing network interface cards in compute servers and network gateways. Various example embodiments, as illustrated by the results of the experiments discussed above, are effective at enforcing the delay requirements of explicitly provisioned CGL flows in simulated data center fabrics under both light and heavy loads.

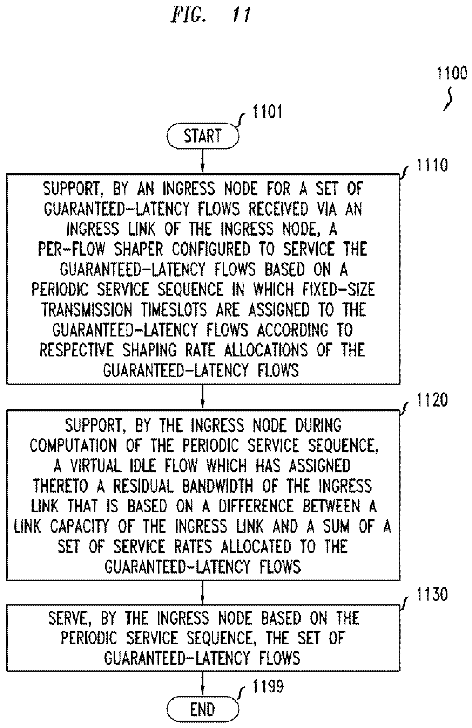

FIG. 11 depicts an example embodiment of a method for supporting communication of flows using a set of fixed-size transmission timeslots. It will be appreciated that, although primarily presented herein as being performed serially, at least a portion of the functions of method 1100 may be performed contemporaneously or in a different order than as presented in FIG. 11. At block 1101, the method 1100 begins. At block 1110, support, by an ingress node for a set of guaranteed-latency flows received via an ingress link of the ingress node, a per-flow shaper configured to service the guaranteed-latency flows based on a periodic service sequence in which fixed-size transmission timeslots are assigned to the guaranteed-latency flows according to respective shaping rate allocations of the guaranteed-latency flows. At block 1120, support, by the ingress node during computation of the periodic service sequence, a virtual idle flow which has assigned thereto a residual bandwidth of the ingress link that is based on a difference between a link capacity of the ingress link and a sum of a set of service rates allocated to the guaranteed-latency flows. At block 1130, serve, by the ingress node based on the periodic service sequence, the set of guaranteed-latency flows. At block 1199, the method 1100 ends.

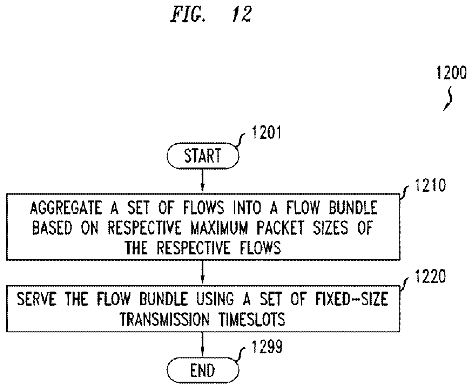

FIG. 12 depicts an example embodiment of a method for supporting communication of flows based on bundling of the flows and serving the flow bundles using a set of fixed-size transmission timeslots. It will be appreciated that, although primarily presented herein as being performed serially, at least a portion of the functions of method 1200 may be performed contemporaneously or in a different order than as presented in FIG. 12. At block 1201, the method 1200 begins. At block 1210, aggregate a set of flows into a flow bundle based on respective maximum packet sizes of the respective flows. At block 1220, serve the flow bundle using a set of fixed-size transmission timeslots. At block 1299, the method 1200 ends.

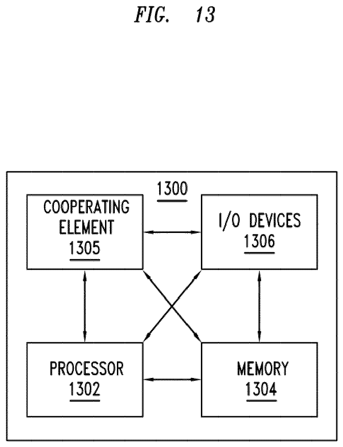

FIG. 13 depicts an example embodiment of a computer suitable for use in performing various functions presented herein.

The computer 1300 includes a processor 1302 (e.g., a central processing unit (CPU), a processor, a processor having one or more processor cores, a processor core of a processor, or the like) and a memory 1304 (e.g., a random access memory, a read only memory, or the like). The processor 1302 and the memory 1304 may be communicatively connected. In at least some example embodiments, the computer 1300 may include at least one processor and at least one memory including computer program code, wherein the at least one memory and the computer program code are configured to, with the at least one processor, cause the computer to perform various functions presented herein.

The computer 1300 also may include a cooperating element 1305. The cooperating element 1305 may be a hardware device. The cooperating element 1305 may be a process that can be loaded into the memory 1304 and executed by the processor 1302 to implement various functions presented herein (in which case, for example, the cooperating element 1305 (including associated data structures) can be stored on a non-transitory computer-readable storage medium, such as a storage device or other suitable type of storage element (e.g., a magnetic drive, an optical drive, or the like)).

The computer 1300 also may include one or more input/output devices 1306. The input/output devices 1306 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1300 may represent a general architecture and functionality suitable for implementing functional elements described herein, portions of functional elements described herein, or the like, as well as various combinations thereof. For example, computer 1300 may provide a general architecture and functionality that is suitable for implementing one or more elements presented herein, such as a device (e.g., a NIC, a line card, or the like) or a portion thereof, a node (e.g., a router, switch, server, or the like) or a portion thereof, a controller (e.g., an SDN controller, a path computation entity (PCE), a network controller, or the like) or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

**1.** An apparatus, comprising:
at least one processor; and at least one memory including computer program code; wherein the at least one memory and the computer program code are configured to, with the at least one processor, cause the apparatus at least to:

aggregate a set of flows into a flow bundle based on respective maximum packet sizes of the respective flows; and
serve the flow bundle using a set of fixed-size transmission timeslots.

**2.** The apparatus according to claim 1, wherein
the set of flows is aggregated into the flow bundle such that a sum of the maximum packet sizes of the respective flows does not exceed a timeslot size of the fixed-size transmission timeslots.

**3.** The apparatus according to any of claims 1 to 2, wherein
the flows of the flow bundle share a common latency requirement.

**4.** The apparatus according to any of claims 1 to 3, wherein
the flows of the flow bundle share a common maximum packet size.

**5.** The apparatus according to any of claims 1 to 4, wherein
the set of fixed-size transmission timeslots is part of a periodic service sequence in which the fixed-size transmission timeslots are assigned to bundles of flows according to respective shaping rate allocations of the bundles of flows.

**6.** The apparatus according to any of claims 1 to 5, wherein
a service rate of the flow bundle is set to a service rate that supports a respective latency requirement of one of the flows of the flow bundle.

**7.** The apparatus according to claim 6, wherein,
based on a determination that a sum of respective throughput requirements of the respective flows of the flow bundle exceeds the service rate of the flow bundle, the service rate of the flow bundle is modified to be set to the sum of respective throughput requirements of the respective flows.

**8.** The apparatus according to any of claims 1 to 7, wherein,
to serve the flow bundle using the set of fixed-size transmission timeslots, the at least one memory and the computer program code are configured to, with the at least one processor, cause the apparatus at least to:
serve at least one of the flows of the flow bundle using at least one of the fixed-size transmission timeslots.

**9.** The apparatus according to claim 8, wherein
the flows of the flow bundle are served based on a set of credit counters associated with the respective flows of the flow bundle.

**10.** The apparatus according to claim 9, wherein
only ones of the flows of the flow bundle with non-negative credits are served.

**11.** The apparatus according to any of claims 1 to 10, wherein

the flows are continuous guaranteed-latency (CGL) flows in a software-defined guaranteed-latency networking (SD-GLN) context, wherein
a relationship exists between a service rate of a CGL flow and a latency requirement that the SD-GLN context supports for that CGL flow.

**12.** The apparatus according to claim 11, wherein,
for at least one of the CGL flows, the respective CGL flow is a latency-driven flow having a respective latency requirement that imposes allocation of a respective service rate greater than a respective throughput requirement of the latency-driven flow.

**13.** The apparatus according to claim 12, wherein

the CGL flows aggregated into the flow bundle do not share a common latency requirement, wherein
a latency requirement selected for calculation of a service rate of the flow bundle is a lowest latency requirement of any of the CGL flows in the set of CGL flows.

**14.** The apparatus according to claim 13, wherein,
based on a determination that a sum of respective throughput requirements of the respective CGL flows of the flow bundle exceeds the service rate of the flow bundle, the service rate of the flow bundle is modified to be set to the sum of respective throughput requirements of the respective CGL flows.

**15.** A method, comprising:

aggregating a set of flows into a flow bundle based on respective maximum packet sizes of the respective flows; and
serving the flow bundle using a set of fixed-size transmission timeslots.

FIG. 1
COMMUNICATION SYSTEM
100
SDN
CONTROLLER
120
CGL + SGL ROUTING CONFIGURATION
CGL FLOW ALLOCATION REQUESTS
FLOW
QUEUES
CGL SHAPER
CONFIGURATION
SP
LOAD + DELAY
MEASUREMENTS
CLASS QUEUES
CGL
SGL
BE
SP
COMMUNICATION
NETWORK
110
INGRESS NODES
111
INTERIOR NODES
115
EGRESS NODES
119

FIG. 2
TOPOLOGY–HIERARCHY MAPPING
200
DH1
DH2
DH3
DH4
DH5
DH6
DH7
DH8
L6
EL1
EL2
EL3
EL4
L4
L5
SP1
SP2
L2
L3
IL1
IL2
IL3
IL4
L1
SH1
SH2
SH3
SH4
SH5
SH6
SH7
SH8
NETWORK TOPOLOGY
210
SH3 HIERARCHY
L1
L6
f0
L2
L3
TO DH4
TO DH5
TO DH6
SHAPER HIERARCHY
220

LEAF-SPINE
DATA CENTER
FABRIC
300
SPINES
LEAVES
HOSTS

*FIG. 3*

FIG. 4
LEAF-SPINE FABRIC, 32 INGRESS LINKS
SERVICE RATE GRAPH 400
W-1536
B-1536
W-512
B-512
W-256
B-256
SERVICE RATE [Mb/s]
1500
1200
900
600
300
0
40
50
60
70
80
90
100
GUARANTEED LATENCY [μs]

FIG. 5
TOPOLOGY-HIERARCHY MAPPING
500
IDEAL
L3
L4
L3
L4
POSSIBLE
L3
L3
L4
L4
L1
L7
L8
L3a
L4a
L3b
L4b
SHAPER HIERARCHY
520
L1 HIERARCHY IN SH1
DH1
DH2
SW4
SW2
SW3
SW1
SH1
SH2
L1
L2
L3
L4
L5
L6
L7
L8
NETWORK TOPOLOGY
510

FIG. 6
L1
L7
L8
L3a
L4a
L3b
L4b
PRIMARY SHAPER
610
(FOR SCHEDULING DECISION)
L1
L7
L8
L3
L4
PARALLEL SHAPER
620
(FOR ADDED ELIGIBILITY CONDITION)

FIG. 7
QUEUING LATENCY RATIO GRAPH
700
BOUND
AVG
MAX
EXPERIMENT 1: 36 μs LATENCY BOUND, 18.1% LOAD
QUEUING LATENCY RATIO [LOG]
100
10
1
0.1
FIFO
FLAT
HS
MPHS
SHAPER HIERARCHY TYPE

QUEUING LATENCY RATIO GRAPH
800
EXPERIMENT 2: 36 μs LATENCY BOUND, 7.81% LOAD
BOUND
AVG
MAX
QUEUING LATENCY RATIO [LOG]
100
10
1
0.1
FIFO
FLAT
HS
MPHS
SHAPER HIERARCHY TYPE

*FIG. 8*

*FIG. 9*

QUEUING LATENCY RATIO GRAPH
900
EXPERIMENT 3: MAX LATENCY, 90.1% LOAD
BOUND
22 μs
24 μs
28 μs
36 μs
52 μs
84 μs
148 μs
276 μs
100
10
1
0.1
QUEUING LATENCY RATIO [LOG]
FIFO
FLAT
HS
MPHS
INGRESS SCHEDULER TYPE

QUEUING LATENCY GRAPH
1000
EXPERIMENT 4: HS vs. MPHS
QUEUING LATENCY [ μs]
50
40
30
20
10
0
18
20
22
24
26
28
30
32
ACTIVE SOURCE HOSTS
B-1.6
B-3.2
B-12.8
HS-1.6
HS-3.2
HS-12.8
MPHS-1.6
MPHS-3.2
MPHS-12.8

*FIG. 10*

*FIG. 11*

1100
1101
START
1110
SUPPORT, BY AN INGRESS NODE FOR A SET OF GUARANTEED-LATENCY FLOWS RECEIVED VIA AN INGRESS LINK OF THE INGRESS NODE, A PER-FLOW SHAPER CONFIGURED TO SERVICE THE GUARANTEED-LATENCY FLOWS BASED ON A PERIODIC SERVICE SEQUENCE IN WHICH FIXED-SIZE TRANSMISSION TIMESLOTS ARE ASSIGNED TO THE GUARANTEED-LATENCY FLOWS ACCORDING TO RESPECTIVE SHAPING RATE ALLOCATIONS OF THE GUARANTEED-LATENCY FLOWS
1120
SUPPORT, BY THE INGRESS NODE DURING COMPUTATION OF THE PERIODIC SERVICE SEQUENCE, A VIRTUAL IDLE FLOW WHICH HAS ASSIGNED THERETO A RESIDUAL BANDWIDTH OF THE INGRESS LINK THAT IS BASED ON A DIFFERENCE BETWEEN A LINK CAPACITY OF THE INGRESS LINK AND A SUM OF A SET OF SERVICE RATES ALLOCATED TO THE GUARANTEED-LATENCY FLOWS
1130
SERVE, BY THE INGRESS NODE BASED ON THE PERIODIC SERVICE SEQUENCE, THE SET OF GUARANTEED-LATENCY FLOWS
1199
END

*FIG. 12*

1200
1201
START
1210
AGGREGATE A SET OF FLOWS INTO A FLOW BUNDLE BASED ON RESPECTIVE MAXIMUM PACKET SIZES OF THE RESPECTIVE FLOWS
1220
SERVE THE FLOW BUNDLE USING A SET OF FIXED-SIZE TRANSMISSION TIMESLOTS
1299
END

*FIG. 13*

1300
COOPERATING ELEMENT 1305
I/O DEVICES 1306
PROCESSOR 1302
MEMORY 1304

Europäisches
Patentamt
European
Patent Office
Office européen
des brevets

# EUROPEAN SEARCH REPORT

Application Number
EP 23 17 8247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOUNG JINOO ET AL: "Zero Jitter for Deterministic Networks Without Time-Synchronization", IEEE ACCESS, IEEE, USA, vol. 9, 24 March 2021 (2021-03-24), pages 49398-49414, XP011847694, DOI: 10.1109/ACCESS.2021.3068515 [retrieved on 2021-03-31] * page 19409, left-hand column; table 6 * ----- | 1-15 | INV. H04L47/22 H04L47/28 H04L47/41 |
| X | JOUNG JINOO: "Framework for Delay Guarantee in Multi-Domain Networks Based on Interleaved Regulators", ELECTRONICS, vol. 9, no. 3, 1 March 2020 (2020-03-01), page 436, XP093094463, Basel, Switzerland ISSN: 2079-9292, DOI: 10.3390/electronics9030436 * page 4 - page 5 * ----- | 1,2,15 | |
| | | | TECHNICAL FIELDS SEARCHED (IPC) |
| | | | H04L |

The present search report has been drawn up for all claims

| Place of search | Date of completion of the search | Examiner |
|---|---|---|
| The Hague | 26 October 2023 | Tsuchiya, Kuni |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)